# EUROPÄISCHE PATENTANMELDUNG

(11) **EP 3 135 611 A1**
(43) Veröffentlichungstag der Anmeldung: **01.03.2017**
(21) Anmeldenummer: 16000927.0
(22) Anmeldetag: 25.04.2016
(51) Int. Cl.: B65G 1/137, B65G 1/02, B65G 1/04

(54) **KOMMISSIONIERMODUL**

(30) Priorität: 17.08.2015 DE 102015011153
(71) Anmelder: TWI GmbH, 76189 Karlsruhe (DE)
(72) Erfinder: Buck, Nils, 76 275 Ettlingnen (DE)
(74) Vertreter: Happe, Otto

(57) **Zusammenfassung**

Die Erfindung betrifft ein aus mindestens einem Fächerturm (1) und mindestens einem Fächerregal (2) bestehendes Kommissioniermodul für die Kommissionierung unterschiedlicher Artikel, die für mehrere unterschiedliche Empfänger in unterschiedlicher Stückzahl bestimmt sind, wobei der Fächerturm (1) von oben gesehen rund ausgebildet und um seine senkrechte Mittelachse drehbar angeordnet ist, und wobei mehrere Fächer des Fächerturms (1) jeweils radial um die Mittelachse des Fächerturms (1) nebeneinander angeordnet sind. Hierbei sind an der Unterseite des Fächerregals (2) des Kommissioniermoduls Rollen angebracht sind, so dass das Fächerregal (2) verfahrbar ist.

## Beschreibung

Die Erfindung betrifft ein aus mindestens einem Fächerturm und mindestens einem Fächerregal bestehendes Kommissioniermodul für die Kommissionierung unterschiedlicher Artikel, die für mehrere unterschiedliche Empfänger in unterschiedlicher Stückzahl bestimmt sind, wobei der Fächerturm von oben gesehen rund ausgebildet und um seine senkrechte Mittelachse drehbar angeordnet ist, und wobei mehrere Fächer des Fächerturms jeweils radial um die Mittelachse des Fächerturms nebeneinander angeordnet sind.

Unter Kommissionierung versteht man das Zusammenstellen von bestimmten Artikeln aus einer bereitgestellten Gesamtmenge aufgrund eines Auftrags (Kundenauftrag oder Produktionsauftrag). Die Kommissionierung kann automatisch, halbautomatisch oder manuell durchgeführt werden. Die vorliegende Erfindung bezieht sich auf die halbautomatische Kommissioierung, d. h. es werden auch noch Kommissionierer benötigt.

Ein Kommissioniermodul hat zwar eine gewisse Ähnlichkeit mit einer Fördervorrichtung oder einer Lagereinrichtung für Artikel; tatsächlich sind aber Fördervorrichtungen und Lagereinrichtungen mit einem Kommissioniermodul nicht vergleichbar, weil die zu kommissionierenden Artikel (in erster Linie Zeitungen und Zeitschriften) sich nur für einen sehr kurzen Zeitraum, d. h. während der Sortierung, in dem Kommissioniermodul befinden.

Bei einem bekannten Fördersystem (DE 102 06 837 A1) sind zwar zwei nebeneinander angeordnete mit Fächern versehene Regale vorhanden, von denen eines als so genannter drehbarer Regalturm mit radial positionierten Fächern ausgebildet ist. Hierdurch sollen eine vergrößerte Speicherkapazität und kompakte Abmessungen der gesamten Einheit angestrebt werden. Ferner sind zwischen den beiden Regalen eine Übergabeeinrichtung und weitere Bauteile angeordnet, ohne die die in der DE 102 06 837 A1 beschriebene Vorrichtung nicht funktionieren würde. Die in der DE 102 06 837 A1 beschriebene Vorrichtung ist daher für die Lösung der von einem Kommissioniermodul zu lösenden Aufgabe ganz offensichtlich nicht geeignet.

Es ist ferner ein System zum Lagern und Wiederfinden von Artikeln bekannt (EP 0 300 830 A1), bei dem einige bauliche Ähnlichkeiten mit einem Kommissioniermodul bestehen. Auch dieses System ist für Lösung der von einem Kommissoniermodul zu lösenden Aufgabe ganz offensichtlich nicht geeignet.

Ein Kommissioniermodul der eingangs genannten Art dient nicht zur Förderung oder zur Lagerung von Artikeln; ein Kommissioniermodul dient vielmehr dazu, eine Vielzahl unterschiedlicher Artikel, beispielsweise Zeitungen und Zeitschriften, die in großer Stückzahl angeliefert werden, in unterschiedliche kleinere Stückzahlen aufzuteilen und diese kleineren Stückzahlen unterschiedlicher Artikel für ganz bestimmte aber unterschiedliche Kunden zusammenzustellen und schnellstmöglich (innerhalb weniger Stunden) an diese Kunden zu verteilen. Es geht also ausschließlich um die schnellstmögliche Zuordnung einer Vielzahl unterschiedlicher Artikel nach Art und Menge zu bestimmten aber unterschiedlichen Kunden, und nicht, wie bei Fördervorrichtungen und Lagereinrichtungen üblich, darum, Artikel über längere Zeit zu lagern und bei Abruf an bestimmte Kunden auszuliefern. Bei einem Kommissioniermodul erfolgt zwar auch eine Lagerung der Artikel in Regalen, jedoch nur sehr kurzzeitig und ausschließlich zum Zweck der Zuordnung bestimmter Anteile der Artikel (Stückzahlen) zu bestimmten Kunden. Es erfolgt schließlich auch ein Transport der Artikel zu den Kunden; hieran ist aber das Kommissioniermodul nicht beteiligt.

Ein Kommissioniermodul der eingangs genannten Art ist bekannt aus der EP 1995 187 A1, Dieses Kommissioniermodul hat sich in der Praxis bewährt. Der Erfindung liegt die Aufgabe zu Grunde, das aus der EP 1995 187 A1 bekannte Kommissioniermodul zu verbessern. Die Lösung der gestellten Aufgabe besteht in erster Linie darin, dass an der Unterseite des Fächerregals des Kommissioniermoduls Rollen angebracht sind, so dass das Fächerregal verfahrbar ist.

Dadurch, dass das Fächerregal verfahrbar ausgebildet ist, können Sendungen aus mehreren Fächertürmen zusammengestellt werden, so dass ein Vielfaches des Artikelspektrums kommissioniert werden kann. Dabei wird nur ein verhältnismäßig geringer Raum benötigt.

In Ausgestaltung der Erfindung ist das Fächerregals in einem ortsfesten Rahmengestell angeordnet. Dadurch ist gewährleistet, dass beim Wegschieben des Fächerregals der Displaymast und die Displays unverändert in ihrer ursprünglichen Position verbleiben.

In weiterer Ausgestaltung der Erfindung weist der Fächerturm mehrere übereinander angeordnete Ebenen mit mehreren Fächern auf, in denen die zu kommissionierenden Artikel eingeordnet sind und aus dem Fächerturm in das Fächerregal kommissioniert werden. Dadurch ergeben sich kürzere Wege und schnellere Zugriffe für den Bediener.

Nach einem weiteren Merkmal der Erfindung ist neben dem Fächerturm ein nicht mit dem Fächerregal verbundener Displaymast derart angeordnet, dass sich unmittelbar, neben jedem Fach des Fächerturms ein Display befindet, das die aus dem jeweiligen Fach zu entnehmende Anzahl von Artikeln anzeigt. Je nach Ausführung kann die Gesamtmenge für alle zu bedienenden Sendungen oder die Menge für eine Sendung im Fächerturm angezeigt werden. Jedes Fach am Fächerregal ist ebenfalls mit einem Display ausgerüstet und zeigt die für diesen Fall zugeteilte Menge an.

Das erfindungsgemäße Kommissioniermodul kann noch dadurch verbessert werden, dass neben jedem Display ein Quittierungstaster vorgesehen ist, mit dem die Zuteilung des betreffenden Artikels und damit der betreffende Teilauftrag bestätigt wird. Diese Bestätigung kann dabei während der Kommissionierung des aktuellen Artikels oder anschließend getätigt werden.

Die Ausgestaltung des erfindungsgemäßen Kommissioniermoduls ermöglicht es, Artikel aus mehreren Fächertürmen in mehrere Fächerregale zu kommissionieren, während die bekannten Einrichtungen dieser Art nur jeweils die Kommissionierung der Artikel von einem einzigen Fächerturm in ein einziges Fächerregal zulassen.

Mit Abschluss des Artikels wird automatisch zur Zuteilung des nächsten Artikels gewechselt. Befindet sich dieser in der gleichen Spalte des Fächerturms, dann wechselt nur die Anzeige zu der Ebene des Artikels, Befindet sich dieser in einer anderen Spalte des Fächerturms, dreht sich der Fächerturm automatisch zu dieser Spalte hin. Der Entnahmeprozess des nächsten Artikels erfolgt wie bereits beschrieben. Nach diesem Verfahren werden sämtliche für die Aufträge benötigten Artikel des Fächerturms kommissioniert. Ist die Kommissionierung aller Artikel für die im Fächerregal befindlichen Artikel erfolgt, wird das Fächerregal weggeschoben und die Aufträge für das nächste Fächerregal werden gestartet.

Zweckmäßigerweise ist an dem Rahmengestell jedes Fächerregals ein Barcodescanner angebracht, über den die Identifikation des betreffenden Fächerregals erfolgen kann.

Die erfindungsgemäße Ausgestaltung des Kommissioniermoduls ermöglicht es, mehrere Kommissionsmodule von einem übergeordneten Leitsystem zu steuern.

In der Zeichnung sind in einer 3-D-Darstellung mehrere Ausführungsbeispiele des erfindungsgemäßen Kommissioniermoduls dargestellt. Es zeigen:
Fig. 1 ein aus je einem Fächerturm und je einem Fächerregal bestehendes Kommissioniermodul;
Fig. 2 das in Fig. 1 dargestellte Kommissioniermodul bei etwas herausgeschobenem Fächerregal;
Fig. 3 ein jeweils aus mehreren Fächertürmen und mehreren Fächerregalen gebildetes Kommissioniermodul, mit Darstellung des übergeordneten Leitsystems.

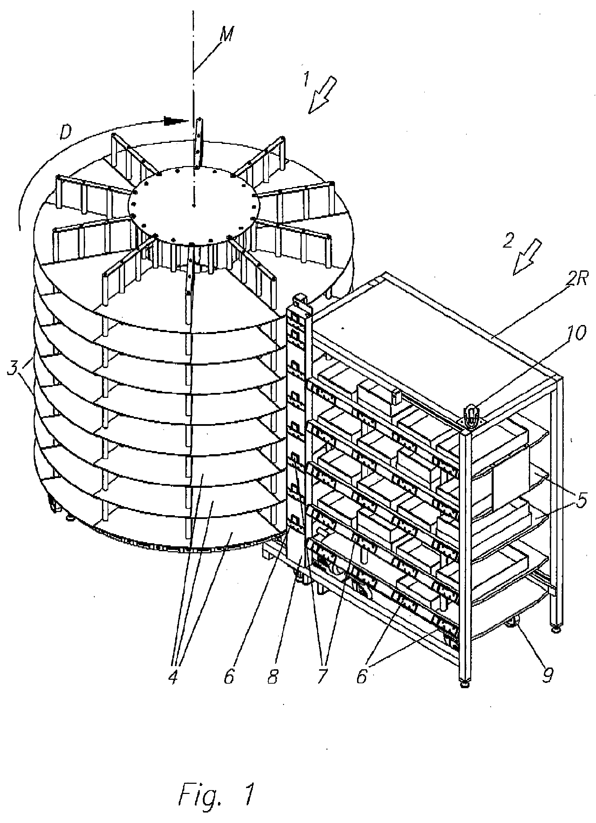

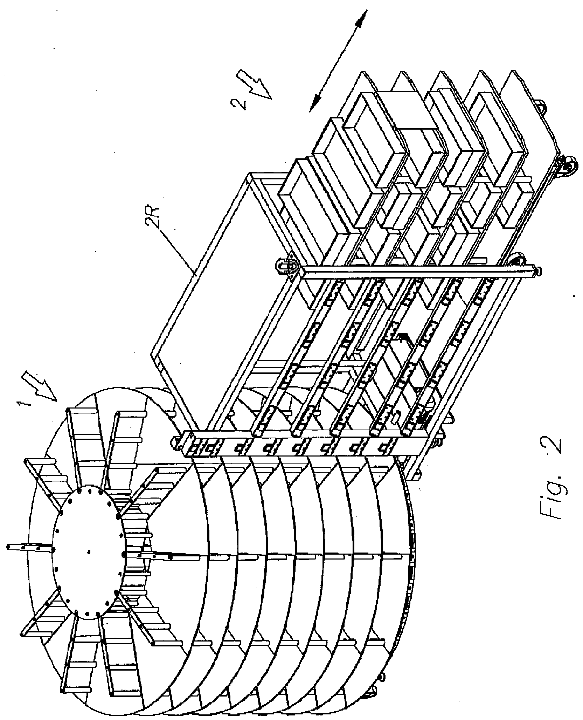

Das in den Fig. 1 und Fig. 2 dargestellte Kommissioniermodul besteht im Wesentlichen aus einem von oben gesehen runden Fächerturm **1** und einem Fächerregal **2** in üblicher Bauart. Der Fächerturm **1** ist drehbar ausgebildet und bewegt sich in der Drehrichtung **D** um die Mittelachse **M** des Fächerturms **1.** Die Mittelachse **M** ist durch eine strichpunktierte Linie angedeutet. Der Fächerturm **1** weist in dem dargestellten Ausführungsbeispiel acht übereinander angeordnete Ebenen **3** mit jeweils zehn radial um die Mittelachse **M** des Fächerregals **1** gleichmäßig verteilten Fächern **4** auf.

Das Fächerregal **2** ist in einem Rahmengestell **2R** angeordnet und weist in dem dargestellten Ausführungsbeispiel zwanzig Fächer **5**, zwanzig Displays **6** und zwanzig Quittierungstaster **7** auf. Weitere Displays **6** sind an einem Displaymast **8** angeordnet. Jeweils eines für jede Ebene 3 des Fächerturms **1.** Unterhalb des Fächerregals **2** sind Rollen **9** angeordnet, so dass das Fächerregal **2** mobil ausgebildet ist und daher im Zusammenwirken mit mehreren Fächertürmen **1** verwendet werden kann. An jedem Rahmengestell **2R** ist ein Barcodescanner **10** angeordnet.

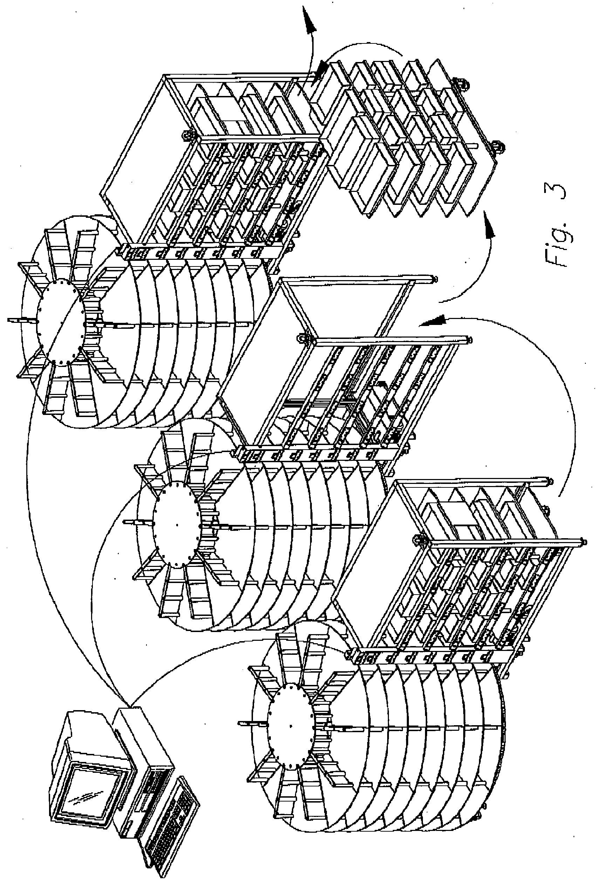

Wie aus Fig. 3 zu ersehen ist, kann das erfindungsgemäße Kommissioniermodul aus mehreren Fächerturm und mehreren Fächerregalen bestehen. Die Wege, die von den Fächerregalen zurückzulegen sind, sind dabei durch Pfeile angedeutet.

## Patentansprüche

1. Aus mindestens einem Fächerturm (1) und mindestens einem Fächerregal (2) bestehendes Kommissioniermodul für die Kommissionierung unterschiedlicher Artikel, die für mehrere unterschiedliche Empfänger in unterschiedlicher Stückzahl bestimmt sind, wobei der Fächerturm (1) von oben gesehen rund ausgebildet und um seine senkrechte Mittelachse (M) drehbar angeordnet ist, und wobei mehrere Fächer (4) des Fächerturms (1) jeweils radial um die Mittelachse (M) des Fächerturms (1) nebeneinander angeordnet sind,
**dadurch gekennzeichnet,**
**dass** an der Unterseite jedes Fächerregals (2) des Kommissioniermoduls Rollen (9) angebracht sind, so dass das Fächerregal (2) verfahrbar ist.

2. Kommissioniermodul nach Anspruch 1, **dadurch gekennzeichnet, dass** das Fächerregal (2) in einem ortsfesten Rahmengestell (2R) angeordnet ist.

3. Kommissioniermodul nach Anspruch 1 oder 2, **dadurch gekennzeichnet, dass** der Fächerturm (1) mehrere übereinander angeordnete Ebenen (3) mit mehreren Fächern (4) aufweist, in denen die zu kommissionierenden Artikel eingeordnet sind und aus dem Fächerturm (1) in Fächer (5) des Fächerregals (2) kommissioniert werden.

4. Kommissioniermodul nach Anspruch 1, 2 oder 3, **dadurch gekennzeichnet, dass** neben dem Fächerturm (1) ein nicht mit dem Fächerregal (2) verbundener Displaymast (8) derart angeordnet ist, dass sich unmittelbar neben jedem Fach (4) des Fächerturms (1) ein Display (6) befinde, das die aus dem jeweiligen Fach (4) zu entnehmende Anzahl von Artikeln anzeigt und damit den betreffenden Teilauftrag bestätigt.

5. Kommissioniermodul nach einem der Ansprüche 1 bis 4, **dadurch gekennzeichnet, dass** neben jedem Display (6) ein Quittierungstaster (7) vorgesehen ist, mit dem die Zuteilung des betreffenden Artikels und damit der betreffende Teilauftrag bestätigt wird.

6. Kommissioniermodul nach einem der Ansprüche 1 bis 5, **dadurch gekennzeichnet, dass** an dem Rahmengestell (2R) jedes Fächerregals (2) ein Barcodescanner (10) angebracht ist, über den die Identifikation des betreffenden Fächerregals (2) erfolgen kann.
